Europäisches Patentamt

European Patent Office

Office européen des brevets

(11) Publication number: **0 290 403**
A1

## EUROPEAN PATENT APPLICATION

(21) Application number: 88830183.5

(22) Date of filing: 29.04.88

(51) Int. Cl.⁴: **B 60 K 17/34**
B 60 G 9/02, B 60 B 35/12

(30) Priority: 30.04.87 IT 6737687

(43) Date of publication of application:
09.11.88 Bulletin 88/45

(84) Designated Contracting States:
AT BE CH DE ES FR GB GR IT LI LU NL SE

(71) Applicant: **Performance Technology of Italy S.r.L.**
**Via della Rocca 35**
**I-10123 Torino (IT)**

(72) Inventor: **Nicolazzi, Carlo**
**Via Giorio La Pira, 15**
**I-10028 Trofarello (Torino) (IT)**

(74) Representative: **Notaro, Giancarlo et al**
**c/o Jacobacci-Casetta & Perani S.p.A. Via Alfieri, 17**
**I-10121 Torino (IT)**

(54) Heavy vehicle, particularly a bus.

(57) A heavy motor vehicle (1), particularly a bus, includes a front live axle (9), a rear live axle (10) and a differential unit (13, 14) associated with each live axle. Each differential unit (13, 14) is rigidly connected to the chassis (2) of the vehicle and each pair of driving wheels (17, 18) is supported by an auxiliary frame (19, 37) having a triangular shape in plan. The two auxiliary frames (19, 37) are each articulated to the chassis (2) of the motor vehicle in correspondence with one of their vertices which is situated in the median plane of the motor vehicle, and have central apertures in correspondence with which the respective differential unit (13, 14) is situated so as to avoid any interference between the auxiliary frame and the differential unit when the suspension is jolted.

FIG. 1

## Description

### A heavy motor vehicle, particularly a bus

The present invention relates to a heavy motor vehicle, particularly a bus, including:
- a chassis
- at least one front live axle,
- at least one rear live axle,
- a front transmission shaft,
- a rear transmission shaft,
- a transmission box from which the front and rear transmission shafts extend and which receives the drive from an engine-gearbox unit, and
- a differential unit associated with each live axle, which receives the drive through one of the transmission shafts and from which extend two drive-shafts for transmitting the drive to the respective wheels of the motor vehicle.

An arrangement of this type is described in French patent No. 1,284,180 which describes a vehicle including two live axles, each of which is provided with a differential unit connected rigidly to the live axle.

A frame for the suspension of the driving wheels of heavy vehicles is also known, which has a triangular shape in plan and is pivotably connected to the chassis of the vehicle in correspondence with one vertex. The transmission layout provides a differential unit for each live axle, connected rigidly to the suspension frame. A suspension frame of this type is not suitable for use in a bus since, in order to avoid interference between the differential unit and the body of the vehicle when the vehicle is jolted, the floor level of the bus would have to be positioned very high off the ground and this would involve considerable inconvenience for the passengers boarding and alighting from the bus. The object of the present invention is to apply to a heavy vehicle, particularly to a bus, a suspension layout which enables a substantial lowering of the floor level of the vehicle.

According to the present invention this object is achieved by the production of a vehicle of the type specified above, in which each differential unit is rigidly connected to the chassis of the vehicle, and in which each pair of driving wheels of the vehicle is supported by an auxiliary suspension frame having a triangular shape in plan with two inclined sides arranged symmetrically with respect to the median plane of the motor vehicle and a third side arranged transverse that plane, the auxiliary frame being pivotably connected to the chassis of the motor vehicle in correspondence with its vertex which is situated in the median plane of the motor vehicle, and also having a central aperture in correspondence with which the respective differential unit is situated so as to avoid any interference between the auxiliary frame and the differential unit when the suspension is jolted.

By virtue of this characteristic, it is possible to produce a vehicle with an appreciably lower floor level than that obtainable with prior-art arrangements, achieving considerable advantages as regards the convenience of the loading and unloading of the passengers.

Further characteristics and advantages of the present invention will become clear from the description which follows with reference to the appended drawings, provided purely by way of non-limiting example, in which:

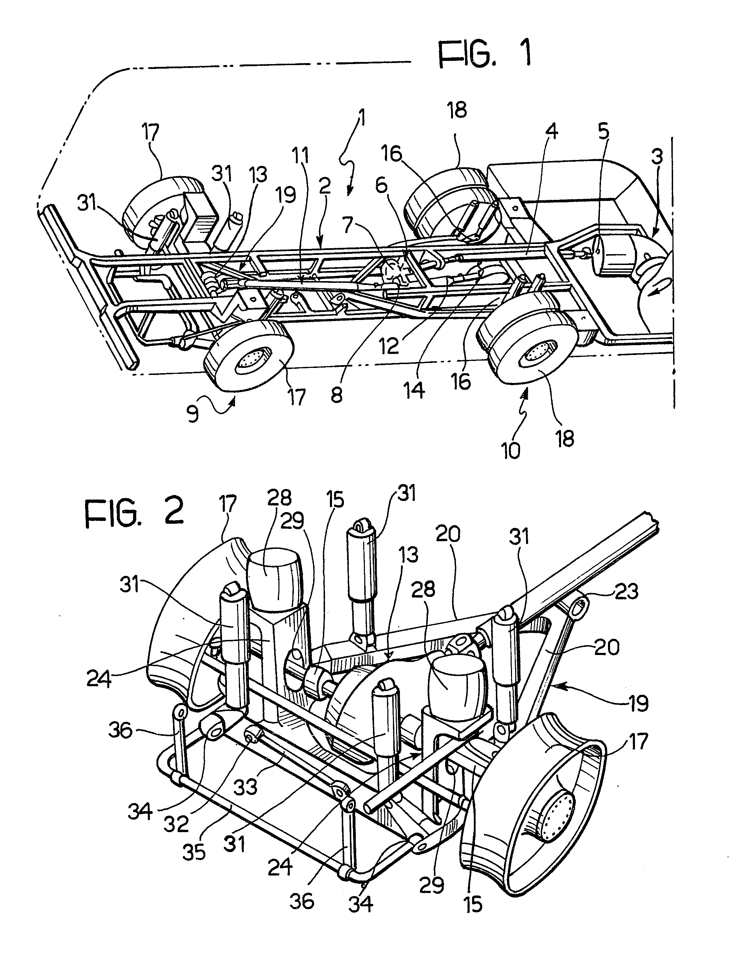

Figure 1 is a schematic perspective view of a bus according to the present invention,

Figure 2 is a schematic perspective view of the front suspension of the vehicle shown in Figure 1,

Figure 3 is a schematic perspective view of an auxiliary frame for the front suspension, and

Figure 4 is a schematic perspective view of the rear suspension of the vehicle shown in Figure 1.

A bus is generally indicated 1 and is provided with a chassis 2 having a lattice structure. The transmission system of the bus 1 includes an engine-gearbox unit 3 and a primary transmission shaft 4 which takes the drive from the output shaft of the gearbox 5 and supplies it to a transmission box 6. The box 6 includes a bevel gear 7 and a differential 8 for dividing the drive between a front live axle 9 and a rear live axle 10. A front transmission shaft 11 and a rear transmission shaft 12 extend from the differential 8 and transmit the drive to a front differential unit 13 and a rear differential unit 14, respectively. An important characteristic of the present invention consists of the fact that the two differential units 13 and 14 are rigidly connected to the chassis 2 of the vehicle. Pairs of drive-shafts, indicated 15 and 16 respectively, which transmit the drive to the wheels 17 and 18, extend from each of the two differential units 13 and 14.

The front wheels 17 are supported by an auxiliary suspension frame 19 having a triangular shape in plan. The auxiliary frame 19 comprises two inclined sides 20 arranged symmetrically with respect to the median plane of the motor vehicle, and a side 21 arranged transverse that plane, the sides 20 and 21 defining a central aperture 22 in correspondence with which the differential unit 13 is situated. The aperture 22 is shaped so as to avoid any interference between the auxiliary frame 19 and the differential unit 13 when the suspension is jolted. The vertex defined by the two sides 20 carries a bush 23 for articulation to the chassis 2. The connection of the bush 23 to the chassis 2 is effected by means of a rubber support whose deformation allows differentiated jolting of the wheels 17 in a transverse plane. Adjacent each of the two vertices formed by the two inclined sides 20 and the transverse side 21, the auxiliary frame 19 has a support pillar 24 with a forked appendage 25 for the attachment of the wheels 17. The top portion 26 of the pillar 24 has a hole 27 for the attachment of an air spring the other end of which is connected to the chassis 2. The two pillars 24 are also provided with through-holes 29 through which the drive-shafts 15 pass. The frame 19 carries four brackets 30 each for the attachment of one end of a shock-absorber 31 whose other end is connected to the chassis 2. The side 21 of the auxiliary frame 19 is provided with an end 32 to which is articulated the end of a transverse bar 33 having its other end articulated to the chassis 2 and intended to withstand the transverse thrusts which act on the suspension. The side 21 is also provided with two brackets 34 to which are articulated the ends of a U-shaped bar 35 the central part of which constitutes a torsion bar supported by the chassis 2 in a freely rotatable manner by means of two rods 36.

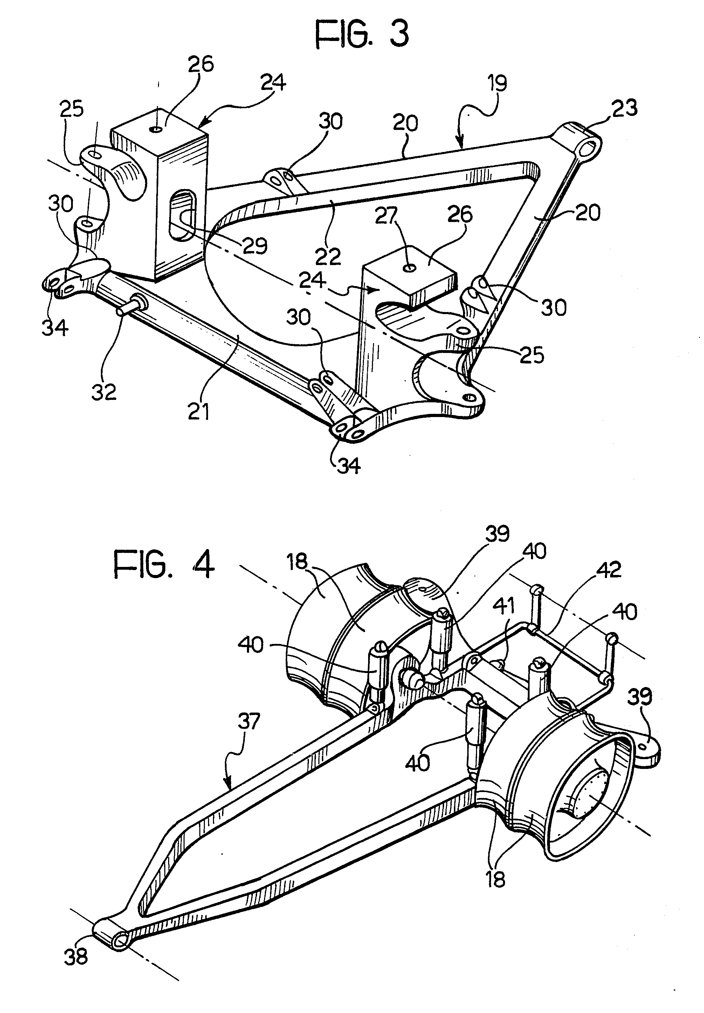

The rear suspension of the bus 1 is illustrated in Figure 4. This comprises an auxiliary frame 37 substantially similar to the auxiliary frame 19 described above, having an attachment bush 38 arranged forward of the axis of the wheels 18. Two parts 39 for the attachment of air springs are connected to the auxiliary frame 37. Four shock-absorbers 40, a transverse bar 41 and an anti-roll bar 42 are also provided for the rear suspension.

Since the differential units 13 and 14 are positioned within the apertures provided in the auxiliary frames 19 and 37, it is possible to produce a vehicle which has a particularly low floor level.

**Claims**

1. A heavy motor vehicle (1), particularly a bus, including:
- a chassis (2),
- at least one front live axle (9),
- at least one rear live axle (10),
- a front transmission shaft (11),
- a rear transmission shaft (12),
- a transmission box (6) from which the front (11) and rear (12) transmission shafts extend and which receives the drive from an engine-gearbox unit (3),
- a differential unit (13, 14) associated with each live axle, which receives the drive through one of the transmission shafts (11, 12) and from which extend two drive-shafts (15) for transmitting the drive to the respective wheels (17, 18) of the motor vehicle (1), characterised in that each differential unit (13, 14) is rigidly connected to the chassis (2) of the vehicle, and in that each pair of driving wheels (17, 18) of the vehicle is supported by an auxiliary suspension frame (19, 37) having a triangular shape in plan with two inclined sides (20) arranged symmetrically with respect to the median plane of the motor vehicle and a third side (21) arranged transverse that plane, the auxiliary frame (19, 37) being pivotally connected to the chassis (2) of the motor vehicle in correspondence with its vertex (23, 38) which is situated in the median plane of the motor vehicle, and also having a central aperture in correspondence with which the respective differential unit (13, 14) is situated so as to avoid any interference with the auxiliary frame (19, 37) when the suspension is jolted.

2. A motor vehicle according to Claim 1, characterised in that at least one auxiliary frame (19) has, adjacent each of the two vertices formed by the inclined sides (20) and the transverse side (21), a support pillar (24) with a forked appendage (25) for the attachment of the steering wheels (17) of the vehicle and a top portion (26) for the attachment of resilient elements.

3. A motor vehicle according to Claim 2, the pillar (24) being provided with a through-hole (29) for the passage of the transmission drive-shafts (15).

4. A motor vehicle according to Claim 1, characterised in that at least one auxiliary frame (19, 37) is provided with a U-shaped bar having its ends articulated to the transverse side (21) of the auxiliary frame (19, 37) and having a straight part constituting a torsion bar supported for free rotation by the chassis (2).

5. A motor vehicle according to Claim 1, characterised in that at least one auxiliary frame (19, 37) is provided with a transverse bar (33, 42) having two ends articulated to the transverse side (21) of the auxiliary frame (19, 37) and to the chassis (2) of the vehicle, respectively.

0290403

# FIG. 1

# FIG. 2

FIG. 3

26 24 19
25 30 20 23
30 29 22 27 26 20
24 30
34 25
32 30
21 34

FIG. 4

39
18 40 42
41
40 40
37
40 39
18
38

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | FR-A-1 284 180 (DAVEY COMPRESSOR CIE) <br> * Figure 1 * | 1 | B 60 K 17/34 <br> B 60 G 9/02 <br> B 60 B 35/12 |
| A | US-A-4 362 221 (MANNING) <br> * Whole document * | 1,2,5 | |
| A | GB-A-2 139 971 (M.A.N.) <br> * Front-page * | 1 | |
| A | FR-A- 767 749 (DAIMLER BENZ) <br> * Page 3, line 13 - page 4, line 67; figures 1-9,11 * | 1,2 | |
| A | GB-A-1 082 992 (COUNTY COMMERCIAL CARS) <br> * Page 2, lines 34-39; figures 1,2 * | 2 | |
| A | FR-A-2 319 507 (PEUGEOT) <br> * Figures 1-3 * | 1,2,4,5 | |
| A | GB-A-1 347 109 (CHRYSLER) | | TECHNICAL FIELDS SEARCHED (Int. Cl.4) |
| A | DE-A-1 580 327 (M.A.N.) | | B 60 K <br> B 60 G <br> B 60 B <br> B 62 D |

The present search report has been drawn up for all claims

| Place of search | Date of completion of the search | Examiner |
|---|---|---|
| THE HAGUE | 11-08-1988 | ESPEEL R.P. |

EPO FORM 1503 03.82 (P0401)